# EUROPÄISCHE PATENTSCHRIFT

(11) **EP 0 981 583 B1**
(45) Veröffentlichungstag und Bekanntmachung des Hinweises auf die Patenterteilung: **21.12.2016**
(21) Anmeldenummer: 98924312.6
(22) Anmeldetag: 13.05.1998
(51) Int. Cl.: B05D 7/26, C03C 17/00, C03C 17/25, C04B 35/14, C04B 35/486, C04B 20/02, C04B 41/49, C04B 111/00, C04B 26/32, C04B 35/624, C04B 41/00, C09D 4/06, C08F 292/00

(54) **NANOSTRUKTURIERTE FORMKÖRPER UND SCHICHTEN SOWIE VERFAHREN ZU DEREN HERSTELLUNG**
NANOSTRUCTURED MOULDED BODIES AND LAYERS AND METHOD FOR PRODUCING SAME
CORPS MOULES ET COUCHES NANOSTRUCTURES ET LEUR PROCEDE DE PRODUCTION

(30) Priorität: 13.05.1997 DE 19719948; 23.10.1997 DE 19746885
(43) Veröffentlichungstag der Anmeldung: 01.03.2000
(73) Patentinhaber: Leibniz-Institut für Neue Materialien gemeinnützige GmbH, 66123 Saarbrücken (DE)
(72) Erfinder: ARPAC, Ertugrul,Prof.Dr., 07058 Antalya (TR); KRUG, Herbert, Dr., 73433 Aalen (DE); MÜLLER, Peter, Dr., 49808 Lingen (DE); OLIVEIRA, Peter, William, Dr., D-66123 Saarbrücken (DE); SCHMIDT, Helmut,Prof.,Dr., D-66130 Saarbrücken (DE); SEPEUR, Stefan, Dr., 66787 Wadgassen (DE); WERNER, Bettina, Dr., 58239 Schwerte (DE)
(74) Vertreter: Patentanwälte Gierlich & Pischitzis Partnerschaft mbB
(86) Internationale Anmeldenummer: PCT/EP1998/002842
(87) Internationale Veröffentlichungsnummer: WO 1998/051747

(56) Entgegenhaltungen:
- DE-A- 4 336 694
- DE-A- 19 540 623
- DE-A- 19 630 100
- US-A- 4 455 205
- SCHMIDT H: "Multifunctional inorganic-organic composite sol-gel coatings for glass surfaces" JOURNAL OF NON-CRYSTALLINE SOLIDS, Bd. 178, November 1994, Seite 302-312 XP004067786

## Beschreibung

Die vorliegende Erfindung betrifft nanostrukturierte Schichten sowie Verfahren zu deren Herstellung. Insbesondere betrifft die vorliegende Erfindung nanostrukturierte Schichten, die mit Hilfe eines naßchemischen Verfahrens hergestellt werden.

Nanostrukturierte Werkstoffe sind schon seit längerer Zeit bekannt. Sie werden in der Regel dadurch hergestellt, daß man nanoskalige Teilchen mit Durchmessern im unteren Nanometerbereich durch ein geeignetes Verfahren verdichtet (siehe z.B. H. Gleiter, Nanocrystalline Materials, Pergamon Press, Oxford, 1989). Dies geschieht meist unter hohem Druck. Hierbei nutzt man die hohen Diffusionsraten in den Außenbezirken der nanoskaligen Teilchen aus, wobei unter Einwirkung von Druck (und unter Umständen gleichzeitiger Einwirkung von erhöhten Temperaturen) eine Verdichtung zu dichten Körpern stattfindet. Entsprechende naßchemische Verfahren, wie beispielsweise der Sol-Gel-Prozeß, führen in der Regel zu porösen Gelen, da durch die hohe Oberflächenaktivität der Teilchen zwar eine Bindung derselben stattfindet, jedoch ein dichtes Aneinanderreihen der Teilchen und Ausfüllen der Zwickel nicht erfolgt. Über derartige Verfahren hergestellte Werkstoffe sind einheitlich, d.h. sie verfügen über Grenzflächenphasen, deren Zusammensetzung sich nicht (wesentlich) von derjenigen der Partikelphase unterscheidet (es kann lediglich zusätzlich die Gasphase der Umgebung anwesend sein).

DE-A 43 36 694 beschreibt ein Verfahren zur Herstellung von Keramik- oder Metallsinterkörpern oder -schichten, bei dem man ein bezüglich der Korngröße spezifiziertes nanokristallines Keramik- oder Metallpulver in Anwesenheit einer niedrigmolekularen Verbindung mit einer funktionellen Gruppe in einer Dispersion oberflächenmodifiziert, das Dispergiermedium entfernt und das erhaltene oberflächenmodifizierte Keramik- oder Metallpulver sintert.

DE 196 30 100 beschreibt ein Verfahren zur Herstellung von Formkörpern. Aus DE 195 40 623 ist ein Verfahren zur Herstellung von Kompositmaterialien bekannt, in denen die Füllstoffteilchen im wesentlichen agglomeratfrei in einer Matrixphase verteilt vorliegen. US 4,027,073 beschreibt Beschichtungszusammensetzungen aus kolloidalem Silica und Teilkondensaten eines Silanols, welche thermisch gehärtet werden.

Es wurde nun überraschenderweise gefunden, daß dann, wenn die nanoskaligen Teilchen mit polymerisierbaren und/oder polykondensierbaren organischen Oberflächengruppen versehen werden und diese Oberflächengruppen polymerisiert und/oder polykondensiert werden, auf naßchemischem Weg nanostrukturierte Werkstoffsysteme zugänglich sind, die den bisher auf trockenem Wege hergestellten Systemen ebenbürtig oder sogar überlegen sind. Insbesondere sind auf diesem Wege auch hochtransparente Materialien zugänglich, da durch die geringen Abstände der Teilchen zueinander (ein bis wenige nm) die Korrelationslängen für die Raleigh-Streuung nicht erreicht werden.

Gegenstand der vorliegenden Erfindung ist somit ein Verfahren zur Herstellung von nanostrukturierten Formkörpern und Schichten, welches die folgenden Stufen umfaßt:
a) Bereitstellung einer nanoskalige anorganische Feststoffteilchen mit polymerisierbaren und/oder polykondensierbaren organischen Oberflächengruppen enthaltenden fließfähigen Masse;
b) Aufbringen der Masse von Stufe a) auf ein Substrat;
c) Polymerisation und/oder Polykondensation der organischen Oberflächengruppen der anorganischen Feststoffteilchen unter Bildung eines gehärteten Formkörpers oder einer gehärteten Schicht,
wobei Stufe c) eine photochemische Polymerisation/Polykondensation einschließt. In vielen Fällen kann es von Vorteil sein, wenn sich an die obige Stufe c) eine thermische Nachbehandlung, vorzugsweise bei einer Temperatur im Bereich von 60 bis 150°C, inbesondere 80 bis 130°C, des gehärteten Formkörpers bzw. der gehärteten Schicht anschließt.

Alternativ oder zusätzlich dazu kann eine (weitere) thermische Verdichtung der Schicht bei einer Temperatur von mindestens 250°C, vorzugsweise mindestens 400°C, und insbesondere mindestens 500°C erfolgen. Im Falle einer Schicht auf einem Substrat kann diese thermische Verdichtung selbstverständlich nur durchgeführt werden, wenn das Substratmaterial derartigen hohen Temperaturen ohne Beeinträchtigung standhalten kann, wie dies z.B. bei Glas und vielen Metallen bzw. Metallegierungen (aber auch einigen Kunststoffen) der Fall ist.

In einigen Fällen kann es sich auch empfehlen, eine (weitere) thermische Verdichtung bei Temperaturen im Bereich von 800 bis 1500°C, vorzugsweise 1000 bis 1400°C, durchzuführen.

Allgemein besteht durch eine (Nach-)Behandlung bei Temperaturen von mindestens 350°C die Möglichkeit, die nanoskaligen anorganischen Feststoffteilchen als mechanisch feste Vorstufe zur Herstellung eines rein anorganischen Festkörpers zu nutzen.

In der vorliegenden Beschreibung und den anhängenden Ansprüchen sollen unter "nanoskaligen anorganischen Feststoffteilchen" solche mit einer mittleren Teilchengröße (einem mittleren Teilchendurchmesser) von nicht mehr als 200 nm, vorzugsweise nicht mehr als 100 nm, und insbesondere nicht mehr als 70 nm gemeint sein. Ein besonders bevorzugter Teilchengrößenbereich liegt bei 5 bis 50 nm.

Die nanoskaligen anorganischen Feststoffteilchen können aus beliebigen Materialien bestehen, vorzugsweise bestehen sie jedoch aus Metallen und insbesondere aus Metallverbindungen wie beispielsweise (gegebenenfalls hydratisierten) Oxiden wie ZnO, CdO, SiO₂, TiO₂, ZrO₂, CeO₂, SnO₂, Al₂O₃, In₂O₃, La₂O₃, Fe₂O₃, Cu₂O, Ta₂O₅, Nb₂O₅, V₂O₅, MoO₃ oder WO₃; Chalkogeniden wie beispielsweise Sulfiden (z.B. CdS, ZnS, PbS und Ag₂S), Seleniden (z.B. GaSe, CdSe und ZnSe) und Telluriden (z.B. ZnTe oder CdTe), Halogeniden wie AgCl, AgBr, Agl, CuCl, CuBr, Cdl₂ und Pbl₂; Carbiden wie CdC₂ oder SiC; Arseniden wie AlAs, GaAs und GeAs; Antimoniden wie InSb; Nitriden wie BN, AlN, Si₃N₄ und Ti₃N₄; Phosphiden wie GaP, InP, Zn₃P₂ und Cd₃P₂; Phosphaten, Silikaten, Zirkonaten, Aluminaten, Stannaten und den entsprechenden Mischoxiden (z.B. solchen mit Perowskitstruktur wie BaTiO₃ und PbTiO₃).

Bevorzugt handelt es sich bei den in Stufe a) des erfindungsgemäßen Verfahrens eingesetzten nanoskaligen anorganischen Feststoffteilchen um solche von Oxiden, Sulfiden, Seleniden und Telluriden von Metallen und Mischungen derselben. Erfindungsgemäß besonders bevorzugt werden nanoskalige Teilchen von SiO₂, TiO₂, ZrO₂, ZnO, Ta₂O₅, SnO₂ und Al₂O₃ (in allen Modifikationen, insbesondere als Böhmit, AlO(OH)) sowie Mischungen derselben.

Da die erfindungsgemäß einsetzbaren nanoskaligen Teilchen einen breiten Bereich von Brechzahlen abdecken, kann durch geeignete Auswahl dieser nanoskaligen Teilchen die Brechzahl. einer Schicht in bequemer Weise auf den gewünschten Wert eingestellt werden.

Die Herstellung der erfindungsgemäß eingesetzten nanoskaligen Feststoffteilchen kann auf übliche Weise erfolgen, z.B. durch Flammpyrolyse, Plasmaverfahren, Gasphasenkondensationsverfahren, Kolloidtechniken, Präzipitationsverfahren, Sol-Gel-Prozesse, kontrollierte Nukleations- und Wachstumsprozesse, MOCVD-Verfahren und (Mikro)emulsionsverfahren. Diese Verfahren sind in der Literatur ausführlich beschrieben. Insbesondere können z.B. Metalle (beispielsweise nach der Reduktion der Fällungsverfahren), keramische oxidische Systeme (durch Präzipitation aus Lösung), aber auch salzartige oder Mehrkomponentensysteme herangezogen werden. Zu den salzartigen oder Mehrkomponentensystemen zählen auch Halbleitersysteme.

Die Herstellung der mit polymerisierbaren und/oder polykondensierbaren organischen Oberflächengruppen versehenen nanoskaligen anorganischen Feststoffteilchen, die erfindungsgemäß eingesetzt werden, kann prinzipiell auf zwei verschiedenen Wegen durchgeführt werden, nämlich zum einen durch Oberflächenmodifizierung von bereits hergestellten nanoskaligen anorganischen Feststoffteilchen und zum anderen durch Herstellung dieser anorganischen nanoskaligen Feststoffteilchen unter Verwendung von einer oder mehreren Verbindungen, die über derartige polymerisierbare und/oder polykondensierbare Gruppierungen verfügen. Diese beiden Wege werden weiter unten und in den Beispielen näher erläutert.

Bei den organischen polymerisierbaren und/oder polykondensierbaren Oberflächengruppen kann es sich um beliebige, dem Fachmann bekannte Gruppen handeln, die einer radikalischen, kationischen oder anionischen, thermischen oder photochemischen Polymerisation oder einer thermischen oder photochemischen Polykondensation (gegebenenfalls in Anwesenheit eines geeigneten Initiators bzw. Katalysators) zugänglich sind. Erfindungsgemäß bevorzugt werden Oberflächengruppen, die über eine (Meth)acryl-, Allyl-, Vinyl- oder Epoxygruppe verfügen, wobei (Meth)acryl- und Epoxygruppen besonders bevorzugt werden. Bei den polykondensationsfähigen Gruppen wären vor allem Hydroxy-, Carboxy- und Aminogruppen zu nennen, mit deren Hilfe Ether-, Ester- und Amidbindungen zwischen den nanoskaligen Teilchen erhalten werden können.

Erfindungsgemäß bevorzugt ist es auch, daß die an den Oberflächen der nanoskaligen Teilchen vorhandenen organischen Gruppierungen, die die polymerisierbaren und/oder polykondensierbaren Gruppen umfassen, ein relativ niedriges Molekulargewicht aufweisen. Insbesondere sollte das Molekulargewicht der (rein organischen) Gruppierungen 500 und vorzugsweise 300, besonders bevorzugt 200, nicht übersteigen. Dies schließt selbstverständlich ein deutlich höheres Molekulargewicht der diese Gruppierungen umfassenden Verbindungen (Moleküle) nicht aus (z.B. 1000 und mehr).

Wie bereits oben erwähnt können die polymerisierbaren/polykondensierbaren Oberflächengruppen prinzipiell auf zwei Wegen bereitgestellt werden. Wird eine Oberflächenmodifizierung bereits hergestellter nanoskaliger Teilchen durchgeführt, eignen sich zu diesem Zweck alle (vorzugsweise niedermolekularen) Verbindungen, die zum einen über eine oder mehrere Gruppen verfügen, die mit auf der Oberfläche der nanoskaligen Feststoffteilchen vorhandenen (funktionellen) Gruppen (wie beispielsweise OH-Gruppen im Falle von Oxiden) reagieren oder zumindest wechselwirken können, und zum anderen mindestens eine polymerisierbare/polykondensierbare Gruppe aufweisen. Somit können die entsprechenden Verbindungen z.B. sowohl kovalente als auch ionische (salzartige) oder koordinative (Komplex)-Bindungen zur Oberfläche der nanoskaligen Feststoffteilchen ausbilden, während unter den reinen Wechselwirkungen beispielhaft Dipol-Dipol-Wechselwirkungen, Wasserstoffbrückenbindungen und van der Waals-Wechselwirkungen zu nennen wären. Bevorzugt wird die Ausbildung von kovalenten und/oder koordinativen Bindungen. Konkrete Beispiele für zur Oberflächenmodifizierung der nanoskaligen anorganischen Feststoffteilchen heranziehbare organische Verbindungen sind beispielsweise ungesättigte Carbonsäuren wie Acrylsäure und Methacrylsäure, β-Dicarbonyl-Verbindungen (z.B. ß-Diketone oder ß-Carbonylcarbonsäuren) mit polymerisierbaren Doppelbindungen, ethylenisch ungesättigte Alkohole und Amine, Epoxide und dergleichen. Erfindungsgemäß besonders bevorzugt als derartige Verbindungen werden - insbesondere im Fall von oxidischen Teilchen - hydrolytisch kondensierbare Silane mit mindestens (und vorzugsweise) einem nicht hydrolysierbaren Rest, der über eine polymerisierbare Kohlenstoff-Kohlenstoff-Doppelbindung oder einen Epoxidring verfügt. Vorzugsweise weisen derartige Silane die allgemeine Formel (I) auf:

X-R¹-SiR²₃ (I)

worin X für CH₂=CR³-COO, CH₂=CH oder Glycidyloxy steht, R³ Wasserstoff oder Methyl darstellt, R¹ ein zweiwertiger Kohlenwasserstoffrest mit 1 bis 10, vorzugsweise 1 bis 6 Kohlenstoffatomen ist, der gegebenenfalls eine oder mehrere Heteroatomgruppierungen (z.B. O, S, NH) enthält, die benachbarte Kohlenstoffatome voneinander trennen, und die Reste R², gleich oder verschieden voneinander, aus Alkoxy-, Aryloxy-, Acyloxy- und Alkylcarbonylgruppen sowie Halogenatomen (insbesondere F, Cl und/oder Br) ausgewählt sind.

Vorzugsweise sind die Gruppen R² identisch und ausgewählt aus Halogenatomen, C₁₋₄-Alkoxygruppen (z.B. Methoxy, Ethoxy, n-Propoxy, i-Propoxy und Butoxy), C₆₋₁₀-Aryloxygruppen (z.B. Phenoxy), C₁₋₄-Acyloxygruppen (z.B. Acetoxy und Propionyloxy) und C₂₋₁₀-Alkylcarbonylgruppen (z.B. Acetyl).

Besonders bevorzugte Reste R² sind C₁₋₄-Alkoxygruppen und insbesondere Methoxy und Ethoxy.

Beim Rest R¹ handelt es sich vorzugsweise um eine Alkylengruppe, insbesondere um eine solche mit 1 bis 6 Kohlenstoffatomen, wie z.B. Ethylen, Propylen, Butylen und Hexylen. Wenn X für CH₂=CH steht, bedeutet R¹ vorzugsweise Methylen und kann in diesem Fall auch eine bloße Bindung bedeuten.

Vorzugsweise stellt X CH₂=CR³-COO (wobei R³ vorzugsweise CH₃ ist) oder Glycidyloxy dar. Dementsprechend sind besonders bevorzugte Silane der allgemeinen Formel (I) (Meth)acryloyloxyalkyltrialkoxysilane wie z.B. 3-Methacryloyloxypropyltri(m)ethoxysilan und Glycidyloxyalkyltrialkoxysilane wie beispielsweise 3-Glycidyloxypropyltri(m)ethoxysilan.

Erfolgt bereits die Herstellung der nanoskaligen anorganischen Feststoffteilchen unter Verwendung einer oder mehrerer Verbindungen, die über polymerisierbare/polykondensierbare Gruppen verfügen, kann von einer nachträglichen Oberflächenmodifizierung abgesehen werden (obwohl diese selbstverständlich als zusätzliche Maßnahme möglich ist).

Die in situ-Herstellung von nanoskaligen anorganischen Feststoffteilchen mit polymerisierbaren/polykondensierbaren Oberflächengruppen sei im folgenden am Beispiel von SiO₂-Teilchen erläutert. Zu diesem Zweck können die SiO₂-Teilchen z.B. nach dem Sol-Gel-Prozeß unter Verwendung mindestens eines hydrolytisch polykondensierbaren Silans mit mindestens einer polymerisierbaren/polykondensierbaren Gruppe hergestellt werden. Als derartige Silane eignen sich beispielsweise die oben bereits beschriebenen Silane der allgemeinen Formel (I). Diese Silane werden vorzugsweise entweder allein oder in Kombination mit einem geeigneten Silan der allgemeinen Formel (II)

SiR²₄ (II)

worin R² die oben angegebene Bedeutung aufweist, eingesetzt. Bevorzugte Silane der obigen allgemeinen Formel (II) sind Tetramethoxysilan und Tetraethoxysilan.

Selbstverständlich ist es auch möglich, zusätzlich oder alternativ zu den Silanen der allgemeinen Formel (II) andere Silane einzusetzen, z.B. solche, die über eine (nichthydrolysierbare) Kohlenwasserstoffgruppe ohne jegliche funktionelle Gruppe verfügen, wie beispielsweise Methyl- oder Phenyltrialkoxysilane. Insbesondere dann, wenn eine leicht zu reinigende (easy to clean) Oberfläche des Formkörpers oder der Schicht gewünscht wird, kann es empfehlenswert sein, neben den Silanen der allgemeinen Formel (I) und gegebenenfalls der allgemeinen Formel (II) eine gewisse Menge (z.B. bis zu 60 und insbesondere bis zu 50 Molprozent auf der Basis aller eingesetzten Silane) Silane mit fluorhaltigen (nicht-hydrolysierbaren) Resten, insbesondere Kohlenwasserstoffresten, zu verwenden. Besonders bevorzugt sind hierbei Silane der obigen Formel (I), in denen R² wie oben definiert ist, R¹ eine Ethylengruppe darstellt und X für eine Perfluoralkylgruppe mit 2 bis 12, vorzugsweise 4 bis 8, Kohlenstoffatomen steht. Weitere zu diesem Zweck einsetzbare Silane sind z.B. solche mit (per)fluorierten Aryl- (insbesondere Phenyl)gruppen. Selbstverständlich können derartige fluorierte Silane auch zur Oberflächenmodifizierung von bereits fertigen nanoskaligen anorganischen Feststoffteilchen verwendet werden.

Das in Stufe a) des erfindungsgemäßen Verfahrens eingesetzte Material liegt in Form einer noch fließfähigen Masse (Suspension) vor. Der flüssige Bestandteil dieser Masse setzt sich zum Beispiel aus Wasser und/oder (vorzugsweise mit Wasser mischbarem) organischen Lösungsmittel und/oder Verbindungen, die im Zuge der Herstellung der nanoskaligen Teilchen oder deren Oberflächenmodifizierung eingesetzt oder erzeugt wurden (z.B. Alkoholen im Falle von Alkoxysilanen), zusammen. Gegebenenfalls zusätzlich eingesetzte geeignete organische Lösungsmittel sind zum Beispiel Alkohole, Ether, Ketone, Ester, Amide und dergleichen. Ein (zusätzlicher) Bestandteil der fließfähigen Masse kann beispielsweise aber auch mindestens eine monomere oder oligomere Spezies sein, die über mindestens eine Gruppe verfügt, die mit den an der Oberfläche der nanoskaligen Teilchen vorhandenen polymerisierbaren/polykondensierbaren Gruppen reagieren (polymerisieren bzw. polykondensieren) kann. Als derartige Spezies seien z.B. Monomere mit einer polymerisierbaren Doppelbindung wie beispielsweise Acrylsäureester, Methacrylsäureester, Styrol, Vinylacetat und Vinylchlorid genannt. Als (bevorzugt eingesetzte) monomere Verbindungen mit mehr als einer polymerisierbaren Bindung seien insbesondere solche der allgemeinen Formel (III) genannt:

(CH₂=CR³-COZ-)ₙ-A (III)

worin
n = 2, 3 oder 4, vorzugsweise 2 oder 3 und insbesondere 2;
Z = O oder NH, vorzugsweise O;
R³= H, CH₃;
A = n-wertiger Kohlenwasserstoffrest mit 2 bis 30, insbesondere 2 bis 20 Kohlenstoffatomen, der eine oder mehrere Heteroatomgruppierungen aufweisen kann, die sich jeweils zwischen zwei benachbarten Kohlenstoffatomen befinden (Beispiele für derartige Heteroatomgruppierungen sind O, S, NH, NR (R = Kohlenwasserstoffrest), vorzugsweise O).

Weiter kann der Kohlenwasserstoffrest A einen oder mehrere Substituenten tragen, die vorzugsweise ausgewählt sind aus Halogen (insbesondere F, Cl und/oder Br), Alkoxy (insbesondere C₁₋₄Alkoxy), Hydroxy, gegebenenfalls substituiertem Amino, NO₂, OCOR⁵, COR⁵ (R⁵ = C₁₋₆-Alkyl oder Phenyl). Vorzugsweise ist der Rest A jedoch unsubstituiert oder mit Halogen und/oder Hydroxy substituiert.

In einer besonders bevorzugten Ausführungsform der vorliegenden Erfindung ist A von einem aliphatischen Diol, einem Alkylenglycol, einem Polyalkylenglycol oder einem gegebenenfalls alkoxylierten (z.B. ethoxylierten) Bisphenol (z.B. Bisphenol A) abgeleitet

Weitere einsetzbare Verbindungen mit mehr als einer Doppelbindung sind zum Beispiel Allyl(meth)acrylat, Divinylbenzol und Diallylphthalat. Ebenso kann zum Beispiel eine Verbindung mit 2 oder mehr Epoxygruppen verwendet werden (im Fall der Verwendung von Epoxid-haltigen Oberflächengruppen), z.B. Bisphenol A-diglycidylether oder auch ein (oligomeres) Vorkondensat eines Epoxidgruppenhaltigen hydrolysierbaren Silans (z.B. Glycidoxypropyltrimethoxysilan).

Wenn zusätzliche monomere Verbindungen mit polymerisierbaren/polykondensierbaren Gruppen eingesetzt werden, macht deren Anteil vorzugsweise nicht mehr als 40 Gewichts-%, insbesondere nicht mehr als 30 und besonders bevorzugt nicht mehr als 15 Gewichts-% des Gesamt-Feststoffgehalts der fließfähigen Masse von Stufe a) aus.

In Stufe b) des erfindungsgemäßen Verfahrens wird die fließfähige Masse von Stufe a) auf ein gewünschtes Substrat aufgebracht, um das Substrat ganz oder teilweise zu beschichten. Die für diesen Zweck geeigneten Beschichtungsverfahren sind die herkömmlichen und dem Fachmann bekannten. Beispiele hierfür sind Tauchen, Sprühen, Rakeln, Streichen, Bürsten, Schleudern usw.

Vor dem Aufbringen auf das Substrat kann die fließfähige Masse zum Beispiel durch Zugabe von Lösungsmittel oder Verdampfung von flüchtigen Bestandteilen (insbesondere bereits vorhandenem Lösungsmittel) auf eine geeignete Viskosität eingestellt werden.

Für die Beschichtung mit der fließfähigen Masse von Stufe a) des erfindungsgemäßen Verfahrens eignen sich Substrate aus beliebigen Materialien, insbesondere aus Kunststoffen, Metall und Glas. Diese Substratmaterialien können vor der Aufbringung der fließfähigen Masse gegebenenfalls einer Oberflächenbehandlung unterzogen werden (z.B. Entfettung, Aufrauhen, CoronaEntladung, Behandlung mit einem Primer etc.). Insbesondere im Falle der Beschichtung von Kunststoffsubstraten kann eine geeignete Haftung durch Zusatz einer geeigneten monomeren polymerisierbaren Verbindung und/oder gemäß der unten näher beschriebenen bevorzugten Ausführungsform bereitgestellt werden.

Unter den erfindungsgemäß beschichtbaren Metallsubstraten seien als Beispiele Metalle wie beispielsweise Aluminium, Kupfer, Zink, Nickel und Chrom und Metallegierungen wie (Edel)stahl, Messing und Bronze genannt. Geeignete Kunststoffsubstrate sind beispielsweise solche aus Polycarbonat, Polyestern, Polyamiden, Polystyrol, Poly(meth)acrylaten (z.B. Polymethylmethacrylat), PVC, Polyolefinen (wie Polyethylen und Polypropylen), Kautschuken (ABS, NBS usw.) und Polyphenylensulfid, um nur die wichtigsten zu nennen.

In Stufe c) der erfindungsgemäßen Verfahrens wird eine Polymerisation und/oder Polykondensation der polymerisierbaren/polykondensierbaren Oberflächengruppen der nanoskaligen anorganischen Feststoffteilchen (und gegebenenfalls der polymerisierbaren/polykondensierbaren Gruppen der zusätzlich eingesetzten monomeren oder oligomeren Spezies) durchgeführt. Diese Polymerisation/Polykondensation kann auf die dem Fachmarin geläufige Art und Weise durchgeführt werden. Beispiele für geeignete Verfahren sind thermisch, photochemisch (z.B. mit UV-Strahlung), Elektronenstrahl-Härtung, Laserhärtung, Raumtemperaturhärtung usw. Gegebenenfalls erfolgt eine derartige Polymerisation/Polykondensation in Anwesenheit eines geeigneten Katalysators bzw. Starters (Initiators), der der fließfähigen Masse von Stufe a) spätestens unmittelbar vor deren Einbringen in die Form bzw. Aufbringen auf das Substrat zugesetzt wird.

Als Starter/Startersysteme kommen alle geläufigen und dem Fachmann bekannten Starter/Startsysteme in Frage, einschließlich radikalischer Photostarter, radikalischer Thermostarter, kationischer Photostarter, kationischer Thermostarter und beliebiger Kombinationen derselben.

Konkrete Beispiele für einsetzbare radikalische Photostarter sind Irgacure^{®} 184 (1-Hydroxycyclohexylphenylketon), Irgacure^{®} 500 (1-Hydroxycyclohexylphenylketon, Benzophenon) und andere von der Firma Ciba-Geigy erhältliche Photoinitiatoren vom Irgacure^{®}-Typ; Darocur^{®} 1173, 1116, 1398, 1174 und 1020 (erhältlich von der Firma Merck); Benzophenon, 2-Chlorthioxanthon, 2-Methylthioxanthon, 2-Isopropylthioxanthon, Benzoin, 4,4'-Dimethoxybenzoin, Benzoinethylether, Benzoinisopropylether, Benzildimethylketal, 1,1,1-Trichloracetophenon, Diethoxyacetophenon und Dibenzosuberon.

Beispiele für radikalische Thermostarter sind u.a. organische Peroxide in Form von Diacylperoxiden, Peroxydicarbonaten, Alkylperestern, Alkylperoxiden, Perketalen, Ketonperoxiden und Alkylhydroperoxiden sowie Azo-Verbindungen. Als konkrete Beispiele wären hier insbesondere Dibenzoylperoxid, tert-Butylperbenzoat und Azobisisobutyronitril zu nennen.

Ein Beispiel für einen kationischen Photostarter ist Cyracure^{®} UVI-6974, während ein bevorzugter kationischer Thermostarter 1-Methylimidazol ist.

Diese Starter werden in den üblichen, dem Fachmann bekannten Mengen (vorzugsweise 0,01 - 5 Gew.-%, insbesondere 0,1 - 2 Gew.-%, bezogen auf den Gesamt-Feststoffgehalt der fließfähigen Masse von Stufe a)) eingesetzt. Selbstverständlich kann unter bestimmten Umständen ganz auf den Starter verzichtet werden, wie z.B. im Fall von Elektronenstrahl- oder Laserhärtung.

Die Polymerisation/Polykondensation von Stufe c) des erfindungsgemäßen Verfahrens erfolgt vorzugsweise durch Bestrahlung (insbesondere mit UV-Licht). Besonders bevorzugt ist eine photochemische Polymerisation/Polykondensation bzw. eine Kombination aus thermischer und photochemischer Polymerisation/Polykondensation.

Der Polymerisation/Polykondensation vorangehen kann einen Entfernung von weiteren flüchtigen, nicht-polymerisierbaren/nicht-polykondensierbaren Verbindungen auf dem Substrat befindlichen Masse. Diese Entfernung von flüchtigen Bestandteilen kann aber auch bzw. zusätzlich auf der Stufe der Polymerisation/Polykondensation oder danach erfolgen.

Im folgenden soll ein typisches erfindungsgemäßes Verfahren, das zu Schichten führen kann, beispielhaft skizziert werden, wobei die angegebenen Wertebereiche und Vorgehensweisen unabhängig von den konkret eingesetzten Materialien allgemeine Gültigkeit besitzen.

Zur Schichtherstellung kann beispielsweise so vorgegangen werden, daß hydrolysierbare Silane mit polymerisierbaren/polykondensierbaren Gruppen in einer Konzentration von vorzugsweise nicht mehr als 100 Gew.-%, insbesondere nicht mehr als 75 Gew.-% (bezogen auf Nanopartikel), zu Solen mit beispielsweise oxidischen oder sulfidischen Nanopartikeln gegeben werden. Nach Viskositätseinstellung durch Zugabe bzw. Entfernung von Lösungsmittel (z.B. Alkohol) und nach Zugabe eines Photoinitiators (z.B. in einer Konzentration von 5 Gew.-% bezogen auf das eingesetzte Silan) führt eine Aushärtung der Schicht auf dem gewählten Substrat mit vorzugsweise UV-Licht zu transparenten, rißfreien und homogenen Schichten. Eine thermische Nachbehandlung bei beispielsweise 60 bis 100°C führt in der Regel zu einer signifikanten Verbesserung der Schichteigenschaften, ist jedoch nicht unabdingbar. Die so hergestellten Schichten weisen eine gute Abriebbeständigkeit auf. Da bei diesem Verfahren die thermische Nachbehandlung bei relativ niedrigen Temperaturen durchführbar ist, können auch Substrate mit geringer thermischer Stabilität problemlos eingesetzt werden. Wie bereits oben erwähnt, besteht durch Variation der Menge und Art des eingesetzten Silans und durch die Zugabe eines zusätzlichen organischen Monomers (Methacrylate, Acrylate usw.) in geringen Konzentrationen (beispielsweise < 5 Gew.-%) die Möglichkeit, die Hafteigenschaften der Schicht an das Substrat anzupassen, so daß z.B. Glas und Kunststoffe gleichermaßen beschichtet werden können. Weiter führt die Mitverwendung der oben erwähnten fluorierten Silane bei der Oberflächenmodifizierung zu easy-to-clean-Schichten auf den entsprechenden Substraten bzw. einer Erniedrigung der Oberflächenenergie, während der Zusatz von z.B. Tensiden die Oberflächenenergie erhöhen kann.

Besonders für die Beschichtung von Kunststoffsubstraten wird gemäß einer bevorzugten Ausführungsform der vorliegenden Erfindung so vorgegangen, daß man Nanopartikel (insbesondere solche von AIOOH, ZrO₂, TiO₂ und dergleichen) in relativ hoher Konzentration (in der Regel mindestens 15 und vorzugsweise mindestens 20 Gew.-% bzw. mindestens 7 bzw. 10 Vol.-%, mit bevorzugten Obergrenzen bei 80 Gew.%, insbesondere 60 Gew.-%, bzw. 40 Vol-%, insbesondere 25 Vol-%) in einem flüssigen System dispergiert, das als wesentlichen Bestandteil mindestens ein hydrolysierbares Silan mit polymerisierbarer/polykondensierbarer Gruppe (z.B. ein solches der obigen allgemeinen Formel (I)) umfaßt, und anschließend eine (übliche) Vorhydrolyse des Silans durchführt. Neben dem Silan mit polymerisierbarer/polykondensierbarer Gruppe können gegebenenfalls noch andere hydrolysierbare Komponenten vorliegen, insbesondere andere (gegebenenfalls fluorierte) Silane (z.B. solche der obigen allgemeinen Formel (II)) und/oder hydrolysierbare Verbindungen (z.B. Alkoxide, Halogenide) von Haupt- und Nebengruppenmetallen (z.B. Al, Ti, Zr). Nach der Vorhydrolyse können weitere Spezies mit mehr als einer (vorzugsweise zwei) copolymerisierbaren/copolykondensierbaren Gruppen (insbesondere solche der obigen allgemeinen Formel (III), vorzugsweise in Mengen von bis zu 40, insbesondere bis zu 30 und besonders bevorzugt bis zu 15 Gew.-%) zugegeben werden. Als polymerisierbare Gruppen werden (Meth)acrylatgruppen besonders bevorzugt. Vor dem Auftragen auf ein Kunststoffsubstrat kann diesem System noch ein Lösungsmittel (z.B. ein Alkohol) zur Viskositätseinstellung zugesetzt werden, ebenso wie übliche Lackadditive (siehe unten). Obwohl der resultierende Lack thermisch gehärtet werden kann (vorzugsweise nach Zugabe eines entsprechenden Thermostarters), wurde überraschenderweise gefunden, daß bei Verwendung eines Photoinitiators (vorzugsweise in den oben angegebenen üblichen Mengen) auch eine (alleinige) photochemische Härtung (vorzugsweise mit UV-Licht) zu einer hochkratzfesten, transparenten Schicht führt, die zudem auf den meisten Kunststoffsubstraten ohne Vorbehandlung der Oberflächen derselben gut haftet (z.B. im Fall von Polycarbonaten, Polystyrol, Poly(meth)acrylat usw.).

Selbstverständlich können der entsprechenden Beschichtungszusammensetzung auch Farbstoffe, Pigmente, Mattierungsmittel etc. zugesetzt werden, wenn eine gefärbte bzw. nicht transparente Schicht gewünscht wird. Beispiele für weitere übliche Zusätze für Zusammensetzungen der beschriebenen Art sind Fließadditive, UV-Absorptionsmittel, Antioxidationsmittel (z.B. HALS), Antistatika, Tenside (für hydrophile Oberflächen) und fluorierte Verbindungen (für hydrophobe/oleophobe Oberflächen).

Ein zusätzlicher Vorteil der soeben beschriebenen Vorgehensweise besteht darin, daß, da vorzugsweise ohne separat zugegebenes Lösungsmittel gearbeitet wird (außer zum Zwecke der Viskositätseinstellung nach der Vorhydrolyse), ein im Stand der Technik oft beschriebener Lösungsmittelaustausch vor der Applizierung nicht erforderlich ist.

Im Falle der erfindungsgemäßen Schichten wären allgemein Kratzfestbeschichtungen mit funktionellen Eigenschaften (Antireflex, Korrosionsschutz, Hydrophilie, Hydrophobie, antistatische Schichten) zu nennen. Beschichtbare Materialien schließen solche aus transparenten und nicht-transparenten Kunststoffen, Glas, Metallen, Stein, Holz, Papier und Textilien ein, sind jedoch nicht darauf beschränkt.

Insbesondere eignen sich die vorliegenden Beschichtungszusammensetzungen für die Beschichtung von Bauwerken und Teilen davon; Fortbewegungs- und Transportmitteln und Teilen davon; Arbeitsgerätschaften, Vorrichtungen und Maschinen für gewerbliche bzw. industrielle Zwecke und Forschung sowie Teilen davon; Haushaltsgegenständen und Arbeitsgerätschaften für den Haushalt sowie Teilen davon; Ausrüstung, Geräten und Hilfsmitteln für Spiel, Sport und Freizeit und Teilen davon; sowie Geräten, Hilfsmitteln und Vorrichtung für medizinische Zwecke und Kranke. Auch zur Herstellung von Interferenzschichten sind diese Zusammensetzungen sehr gut geeignet. Konkrete Beispiele für beschichtungsfähige Materialien bzw. Gegenstände werden im folgenden angegeben:
Bauwerke (insbesondere Gebäude) und Teile davon:
   Innen- und Außenfassaden von Gebäuden, Fußböden und Treppen aus Naturstein, Beton usw., Fußbodenbeläge aus Kunststoff, Teppichböden und Teppiche, Fußbodenleisten (Scheuerleisten), Fenster (insbesondere Fensterrahmen, Fensterbänke, Verglasungen aus Glas oder Kunststoff und Fenstergriffe), Jalousien, Rollos, Türen, Türgriffe, Armaturen in Küche, Bad und WC, Duschkabinen, Sanitärzellen, WC-Kabinen, Rohre, Heizkörper, Spiegel, Lichtschalter, Wand- und Bodenkacheln, Beleuchtung, Briefkästen, Dachziegel, Regenrinnen, Antennen, Satellitenschüsseln, Handläufe von Geländern und Rolltreppen, Architekturverglasung, Sonnenkollektoren, Wintergärten, Wände von Aufzügen; Denkmäler, Skulpturen und allgemein Kunstwerke aus Naturstein (z.B. Granit, Marmor), Metall etc., insbesondere auch solche, die im Freien aufgestellt sind.

Fortbewegungs- und Transportmittel (z.B. Pkw, Lkw, Omnibus, Motorrad, Moped, Fahrrad, Eisenbahn, Straßenbahn, Schiff und Flugzeug) und Teile davon:
Scheinwerfer, Innen- und Außenspiegel, Windschutzscheiben, Heckscheiben, Seitenscheiben, Schutzbleche von Fahrrädern und Motorrädern, Kunststoffvisiere von Motorrädern, Instrumente von Motorrädern, Sitze, Sättel, Türgriffe, Lenkräder, Reifenfelgen, Tankstutzen (insbesondere für Diesel), Nummernschilder, Gepäckträger, Dachcontainer für Pkws sowie Cockpits.

Arbeitsgerätschaften, Vorrichtungen und Maschinen für gewerbliche bzw. industrielle Zwecke und Forschung sowie Teile davon:
Formen (z.B. Gießformen, insbesondere aus Metall), Schütttrichter, Einfüllanlagen, Extruder, Wasserräder, Walzen, Transportbänder, Druckmaschinen, Siebdruckschabionen, Abfüllmaschinen, (Maschinen-)Gehäuse, Spritzgußteile, Bohrköpfe, Turbinen, Rohre (innen und außen), Pumpen, Sägeblätter, Abdeckungen (z.B. für Waagen), Tastaturen, Schalter, Knöpfe, Kugellager, Wellen, Schrauben, Displays, Solarzellen, Solaranlagen, Werkzeuge, Werkzeuggriffe, Flüssigkeitsbehälter, Isolatoren, Kapillaren, Linsen, Laboreinrichtungen (z.B. Chromatographiesäulen und Abzüge) und Computer (insbesondere Gehäuse und Monitorscheiben).

Haushaltsgegenstände und Arbeitsgerätschaften für den Haushalt sowie Teile davon:
Möbelfurniere, Möbelleisten, Mülleimer, WC-Bürsten, Tischdecken, Geschirr (z.B. aus Porzellan und Steingut), Glaswaren, Bestecke (z.B. Messer), Tabletts, Pfannen, Töpfe, Backformen, Kochutensilien (z.B. Kochlöffel, Raspeln, Knoblauchpressen usw.), Kochmulden, Heizplatten, Backöfen (innen und außen), Blumenvasen, Abdeckungen von Wanduhren, TV-Geräte (insbesondere Bildschirme), Stereoanlagen, Gehäuse von (elektrischen) Haushaltsgeräten, Bildverglasungen, Christbaumkugeln, Tapeten, Lampen und Leuchten, Polstermöbel, Gegenstände aus Leder.

Ausrüstung, Geräte und Hilfsmittel für Spiel, Sport und Freizeit:
Gartenmöbel, Gartengeräte, Gewächshäuser (insbesondere Verglasungen), Werkzeuge, Spielplatzgeräte (z.B. Rutschen), Bälle, Luftmatratzen, Tennisschläger, Tischtennisschläger, Tischtennisplatten, Skis, Snowboards, Surfboards, Golfschläger, Hanteln, Sitzgelegenheiten in Parks, auf Spielplätzen usw., Motorradkleidung, Motorradhelme, Skianzüge, Skistiefel, Skibrillen, Sturzhelme für Skifahrer, Taucherkleidung und Taucherbrilen.

Geräte, Hilfsmittel und Vorrichtungen für medizinische Zwecke und Kranke:
Prothesen (insbesondere für Gliedmaßen), Implantate, Katheter, künstliche Darmausgänge, Zahnspangen, Zahnersatz, Brillen (Gläser und Gestelle), medizinische Bestecke (für Operationen und Zahnbehandlungen), Gipsverbände, Fieberthermometer und Rollstühle sowie ganz allgemein Krankenhauseinrichtungen.

Neben den obigen Gegenständen können natürlich auch andere Gegenstände und Teile davon vorteilhaft mit den obigen Beschichtungszusammensetzungen beschichtet werden, wie z.B. Schmuck, Münzen, Kunstwerke (z.B. Gemälde), Bucheinbände, Grabsteine, Urnen, Schilder (z.B. Verkehrsschilder), Leuchtreklamen, Ampelanlagen, CDs, Schlechtwetterkleidung, Textilien, Postkästen, Telefonhäuschen, Wartehäuschen für öffentliche Verkehrsmittel, Schutzbrillen, Schutzhelme, Folien (z.B. für die Verpackung von Lebensmitteln), Telefonapparate, Dichtungen für Wasserhähne, ganz allgemein alle Gegenstände, die aus Gummi hergestellt sind, Flaschen, licht-, wärme- oder druckempfindliche Aufzeichnungsmaterialien (vor oder nach der Aufzeichnung, z.B. Photos) und Kirchenfenster.

Hinsichtlich der oben erwähnten Interferenzschichten seien als beispielhafte Anwendungen genannt:
Optische Filter: Antireflex- und Reflexfilter im Bereich der Brillenindustrie, Displays, Bildschirme, Halbleiterlaser, Mikrolinsen-Beschichtung, Solarzellen, "Damage-Resistant"-Laserschichten.

Holographische Schichten: Lichtlenksysteme, Informationsspeicherung, Laserkoppler, Wellenleiter, Dekoration und Architektur.

Prägbare Schichten: Entspiegelungssysteme, Fokussierung in Detektorfeldern, Beleuchtung von Flachbildschirmen, Bildgebung in Fotokopierern, Faseroptiken (Lichteinkopplung).

Lithographie: Herstellung von mikrooptischen Elementen wie Wellenleitern, Gittern, Pinholes, Beugungsgittern (Punktgittem) sowie im Bereich Displaytechnik, Faserchipkopplung und abbildende Optik.

Ausbrennbare Schichten: Farbfilter auf Metallen, Interferenzfilter auf Glas wie z.B. Bandpaßfilter, Antireflexionsfilter, Absorptionsfilter und Strahlteiler.

Die folgenden Beispiele dienen der weiteren Erläuterung der vorliegenden Erfindung.

### Beispiel 1: Synthese eines Sols zur Herstellung von Schichten mit hohem Brechwert

86,861 g TiO₂-Sol (3,5 Gew.-% TiO₂ in Isopropanol; Teilchengröße: 5 nm) werden mit 1,989 g Phosphorsäuretributylester versetzt und 1 Stunde gerührt. Das Sol wird anschließend bei 100°C tropfenweise mit einer Lösung von 1,2 g destilliertem γ-Glycidyloxypropyltrimethoxysilan (GPTS) in 100 g 2-Isopropoxyethanol versetzt. Nach 1-stündigem Rühren wird der Ansatz auf Raumtemperatur abgekühlt und es werden 0,8775 g hydrolysiertes GPTS (hergestellt durch Versetzen von 23,63 g destilliertem GPTS mit 2,70 g 0,1 N HCl und 24-stündigem Rühren sowie anschließendem Abdestillieren von niedermolekularen Reaktionsprodukten bei 3 mbar) zugegeben. Nach 15-minütigem Rühren wird der Ansatz unter Vakuum (3 mbar) destilliert und anschließend mit 120 g 2-Isopropoxyethanol verdünnt. So wird ein transparentes, agglomeratfreies Sol erhalten.

### Beispiel 2: Synthese eines Sols zur Herstellung von Schichten mit niedrigem Brechwert

Eine Mischung aus 23,63 g GPTS (destilliert) und 12,45 g Tetraethoxysilan (TEOS) wird zwecks Hydrolyse und Kondensation mit 2,88 g 0,1 N HCl versetzt. Die resultierende Reaktionsmischung wird anschließend 24 Stunden bei 20°C gerührt und dann einer Vakuumdestillation (bei 3 mbar) zwecks Entfernung niedermolekularer Bestandteile unterzogen. Abschließend wird das verbliebene Reaktionsprodukt mit 50 g Isopropoxyethanol als Lösungsmittel verdünnt.

### Beispiel 3: Synthese eines Sols zur Herstellung von Schichten mit niedrigem Brechwert und zusätzlicher easy-to-clean-Funktion

Es werden 26,63 g destilliertes GPTS mit 8,30 g TEOS und 0,11 g 1H,1H,2H,2H-Perfluoroctyltriethoxysilan (FTS) 15 Minuten unter Rühren gemischt. Das resultierende Sol wird bei 20°C 4 Stunden lang mit 4,5 g 0,1 N HCl unter Rühren hydrolysiert und kondensiert. Darauf werden 52,10 g Isopropoxyethanol und 0,53 g Phosphorsäure zugegeben und es wird weitere 2 Stunden bei 20°C gerührt.

### Beispiel 4: Herstellung einer Schicht mit dem Sol aus Beispiel 1 auf Glas

Das Sol aus Beispiel 1 wird mit 0,08 g Cyracure^{®} UVI-6974 (Ciba-Geigy) und 0,02 g 1-Methylimidazol versetzt. Nach intensivem Rühren wird die Mischung filtriert und ist dann als Beschichtungslack einsetzbar. Glasscheiben (10 cm x 10 cm x 2 mm) werden vor der Beschichtung mit 2-Propanol gereinigt und an Luft getrocknet.

Der Beschichtungslack wird durch Schleuderbeschichtung definiert auf das Substrat aufgebracht. Die Schichtdicke wird über die Drehgeschwindigkeit des Substrats gesteuert.

Für die Aushärtung der Schicht wird ein UV/IR-Kombitrockner (von Firma Beltron) eingesetzt. Das verwendete Gerät verfügt über zwei Quecksilberdampflampen zur Bestrahlung mit UV-Licht, einen IR-Strahler, über dessen Leistung die Oberflächentemperatur geregelt werden kann, und ein Laufband, auf dem die Substrate unter dem UV/IR-Strahler mit definierter Geschwindigkeit vorbeigeführt werden können. Die Leistung der Quecksilberdampflampen beträgt jeweils 400 mW/cm².

Der IR-Strahler wird auf 120°C eingestellt, die Bandlaufgeschwindigkeit beträgt 2,6 m/Min. und die beschichteten Substrate werden insgesamt dreimal bei diesen Einstellungen vorbeigefahren.

Die letzte Stufe des Aushärtens besteht aus einer 15-minütigen thermischen Nachbehandlung bei 120°C in einem Umlufttrockenschrank.

### Beispiel 5: Herstellung einer Schicht mit dem Sol aus Beispiel 1 auf Polycarbonat (PC)

Mit dem Beschichtungsmaterial aus Beispiel 1 werden Polycarbonat-Scheiben (10 cm x 10 cm x 2 mm; Vorbehandlung wie in Beispiel 4) nach dem Verfahren von Beispiel 6 beschichtet und ausgehärtet. Unterschiede: der IR-Strahler wird auf 100°C eingestellt und die letzte Stufe des Aushärtens besteht aus einer 30-minütigen thermischen Nachbehandlung bei 100°C in einem Umlufttrockenschrank.

### Beispiel 6: Herstellung einer Schicht mit dem Sol aus Beispiel 1 auf Polymethylmethacrylat (PMMA)

Mit dem Beschichtungsmaterial aus Beispiel 1 werden Polymethylmethacrylat-Scheiben (10 cm x 10 cm x 2 mm; Vorbehandlung wie in Beispiel 4) nach dem Verfahren von Beispiel 4 beschichtet und ausgehärtet. Unterschiede: keine IR-Bestrahlung und die letzte Stufe des Aushärtens besteht aus einer 60-minütigen thermischen Nachbehandlung bei 80°C in einem Umlufttrockenschrank.

### Beispiel 7: Herstellung einer Schicht mit dem Sol aus Beispiel 2 auf PC

Das Beschichtungsmaterial aus Beispiel 2 wird mit 0,72 g Cyracure^{®} UVI-6974, 0,36 g 1-Methylimidazol und 10 g einer 0,02 gewichtsprozentigen Aluminium-tributoxyethanolat-Lösung in 2-Isopropoxyethanol versetzt und intensiv vermischt. Die notwendige Verdünnung wird durch Zugabe von 50 g 2-Isopropoxyethanol erreicht. Mit diesem Beschichtungsmaterial werden Polycarbonat-Scheiben (siehe Beispiel 1) nach dem Verfahren von Beispiel 5 beschichtet und ausgehärtet.

Unterschiede: die Substrate werden viermal bei einer Bandlaufgeschwindigkeit von 2 m/Min. vorbeigefahren und die letzte Stufe des Aushärtens besteht aus einer 60-minütigen thermischen Nachbehandlung bei 100°C in einem Umlufttrockenschrank.

### Beispiel 8: Herstellung einer Schicht mit dem Sol aus Beispiel 2 auf PMMA

Es wird verfahren wie in Beispiel 7, jedoch ohne Verwendung des IR-Strahlers. Die letzte Stufe des Aushärtens besteht aus einer 60-minütigen thermischen Nachbehandlung bei 70°C in einem Umlufttrockenschrank.

### Beispiel 9: Herstellung einer Schicht mit dem Sol aus Beispiel 3 auf PC

Das Beschichtungsmaterial gemäß Beispiel 3 wird gemäß Beispiel 6 mit Initiatoren versehen und nach dem in Beispiel 6 beschriebenen Verfahren ausgehärtet.

**Eigenschaften der in den Beispielen 4 bis 9 hergestellten Schichten Untersuchungsmethoden:**

| | |
|---|---|
| Brechwert: | Ellipsometrisch |
| Transmission (550 nm): | Spektroskopisch (einseitige Beschichtung der Substrate) |
| Reflexion (550 nm): | Spektroskopisch (unbeschichtete Rückseite der Substrate geschwärzt) |
| Haftung (Schicht auf Substrat): | Gitterschnitt und Klebebandtest gemäß DIN 53151 und DIN 58196 |

Die so erhaltenen Werte sind in der folgenden Tabelle zusammengefaßt.

| Beispiel Nr. | Substratmaterial | Brechwert (550 nm) | Transmission [%] | Reflexion [%] | Haftung |
|---|---|---|---|---|---|
| 4 | Glas | 1,91 | 78,5 | 20 | 0/0 |
| 5 | PC | 1,91 | 81 | 19 | 0/0 |
| 6 | PMMA | 1,91 | 78,5 | 20 | 0/0 |
| 7 | PC | 1,47 | 91 | 8 | 0/0 |
| 8 | PMMA | 1,47 | 91 | 8 | 0/0 |
| 9 | PC | 1,44 | 95 | 2,5 | 0/0 |

### Beispiel 10: Beschichtung von Kunststoffsubstraten

248,8 g (1 Mol) MPTS werden vorgelegt und unter Rühren mit 136,84 g (43 Gew.-% bezogen auf den Gesamt-Feststoffgehalt) AIOOH-Nanopulver (Sol P3, 15nm, Degussa) versetzt. Die Hydrolyse erfolgt durch langsame Zugabe von 36 g (2 Mol) deionisiertem Wasser und 2,5 h Kochen bei 100°C. Nach dem Abkühlen wird das Vorhydrolysat mit 282 g 1-Butanol auf einen Feststoffgehalt von 45% verdünnt und mit 3,5 g (0,5 Gew.-%) Byk^{®}-306 als Verlaufsmittel versetzt. Zur UV-Polymerisation werden 5,46 g (3 Mol% bezogen auf die anwesenden Doppelbindungen) Benzophenon als Photostarter zugesetzt. Die Applizierung des Beschichtungssystems auf diverse Kunststoffe erfolgt mittels Schleuderbeschichtung. Die Aushärtung der Schicht erfolgt durch 2-minütige UV-Bestrahlung mittels Quecksilberlampe.

Die Beschichtung zeigt gute Haftung (GT/TT = 0/0) ohne Substratvorbehandlung, z.B. auf PMMA. Die Kratzfestbeschichtung hat eine Abriebhärte von 11% nach 1000 Zyklen (Taber-Abraser, CS-10F, 500 g/Rolle).

### Beispiel 11: Beschichtung von Kunststoffsubstraten

Das Verfahren von Beispiel 10 wird wiederholt, mit der Ausnahme, daß zusätzlich zu Benzophenon 1,05 g (1 Mol-%) Diethanolamin als Beschleuniger eingesetzt werden.

Die Beschichtung zeigt gute Haftung (GT/TT = 0/0) ohne Substratvorbehandlung, z.B. auf PMMA. Die Kratzfestbeschichtung hat eine Abriebhärte von 9% nach 1000 Zyklen (Taber-Abraser, CS-10F, 500 g/Rolle).

### Beispiel 12: Beschichtung von Kunststoffsubstraten

248,8 g (1 Mol) MPTS werden vorgelegt und unter Rühren mit 99,52 g (31 Gew.-% bezogen auf den Gesamt-Feststoffgehalt) AIOOH-Nanopulver (Sol P3, 15nm, Degussa) versetzt. Die Hydrolyse erfolgt durch langsame Zugabe von 36 g (2 Mol) deionisiertem Wasser und 2,5 h Kochen bei 100°C. Nach dem Abkühlen wird das Vorhydrolysat mit 49,5 g (15 Mol-%) TEGDMA und 3,9 g (0,5 Gew.-%) Byk^{®}-306 als Verlaufsmittel versetzt und mit 343 g 1-Butanol auf einen Feststoffgehalt von 45% verdünnt. Zur UV-Polymerisation werden 0,6 g (2,5 Mol-% bezogen auf die anwesenden Doppelbindungen) Benzophenon als Photostarter zugesetzt. Die Applizierung des Beschichtungssystems auf diverse Kunststoffe erfolgt mittels Schleuderbeschichtung. Die Aushärtung der Schicht erfolgt durch 2-minütige UV-Bestrahlung mittels einer Quecksilberlampe.

Die Beschichtung zeigt gute Haftung (GT/TT = 0/0) ohne Substratvorbehandlung, auf z.B. PMMA. Die Kratzfestbeschichtung hat eine Abriebhärte von 15% nach 1000 Zyklen (Taber-Abraser, CS-10F, 500 g/Rolle). Durch das Dimethacrylat wird die Flexibilität und die Wasserstabilität der Beschichtung erhöht. (Einlagerung bei 65°C in deionisiertem Wasser > 14 Tage, ohne Dimethacrylat 7 Tage.)

## Patentansprüche

1. Verfahren zur Herstellung von nanostrukturierten Schichten, umfassend die folgenden Stufen:
a) Bereitstellung einer nanoskalige anorganische Feststoffteilchen mit polymerisierbaren und/oder polykondensierbaren organischen Oberflächengruppen enthaltenden fließfähigen Masse;
b) Aufbringen der Masse von Stufe a) auf ein Substrat; und
c) Polymerisation und/oder Polykondensation der Oberflächengruppen der Feststoffteilchen unter Bildung einer gehärteten Schicht,
wobei Stufe c) eine photochemische Polymerisation/Polykondensation einschließt.

2. Verfahren nach Anspruch 1, **dadurch gekennzeichnet, dass** es als zusätzliche Stufe eine thermische Nachbehandlung, vorzugsweise bei einer Temperatur im Bereich von 60 bis 150°C, der Schicht von Stufe c) umfasst.

3. Verfahren nach irgendeinem der Ansprüche 1 und 2, **dadurch gekennzeichnet, dass** es als zusätzliche Stufe eine thermische Verdichtung der Schicht bei einer Temperatur von mindestens 250°C, vorzugsweise mindestens 400°C, umfasst.

4. Verfahren nach irgendeinem der Ansprüche 1 bis 3, **dadurch gekennzeichnet, dass** die nanoskaligen Teilchen aus solchen von Metallverbindungen, insbesondere Oxiden, Sulfiden, Seleniden und Telluriden von Metallen und Mischungen derselben, ausgewählt sind.

5. Verfahren nach irgendeinem der Ansprüche 1 bis 4, **dadurch gekennzeichnet, dass** die nanoskaligen Teilchen aus solchen von SiO₂, TiO₂, ZrO₂, ZnO, Ta₂O₅, SnO₂ und Al₂O₃ und Mischungen derselben ausgewählt sind.

6. Verfahren nach irgendeinem der Ansprüche 1 bis 5, **dadurch gekennzeichnet, dass** die polymerisierbaren und/oder polykondensierbaren Oberflächengruppen ausgewählt sind aus organischen Resten, die über eine (Meth)acryl-, Vinyl-, Allyl- oder Epoxygruppe verfügen.

7. Verfahren nach irgendeinem der Ansprüche 1 bis 6, **dadurch gekennzeichnet, dass** die in Stufe a) eingesetzten Feststoffteilchen durch Oberflächenmodifizierung von nanoskaligen Feststoffteilchen mit den entsprechenden Oberflächengruppen hergestellt wurden.

8. Verfahren nach irgendeinem der Ansprüche 1 bis 6, **dadurch gekennzeichnet, dass** die in Stufe a) eingesetzten Feststoffteilchen unter Verwendung mindestens einer Verbindung mit entsprechenden polymerisierbaren/polykondensierbaren Gruppen hergestellt werden.

9. Verfahren nach irgendeinem der Ansprüche 1 bis 8, **dadurch gekennzeichnet, dass** die Herstellung der anorganischen Feststoffteilchen nach dem Sol-Gel-Verfahren erfolgt.

10. Verfahren nach irgendeinem der Ansprüche 1 bis 9, **dadurch gekennzeichnet, dass** die anorganischen Feststoffteilchen von Stufe a) zusätzlich fluorierte Oberflächengruppen, vorzugsweise solche der Formel R_{f}-CH₂-CH₂-, worin R_{f} einen Perfluoralkylrest mit 2 bis 12 Kohlenstoffatomen darstellt, aufweisen.

11. Verfahren nach irgendeinem der Ansprüche 1 bis 10, **dadurch gekennzeichnet, dass** Stufe c) in Anwesenheit von nicht an die Feststoffteilchen gebundenen polymerisierbaren und/oder polykondensierbaren monomeren oder oligomeren Spezies durchgeführt wird.

12. Verfahren nach irgendeinem der Ansprüche 1 bis 11, **dadurch gekennzeichnet, dass** Stufe c) in Anwesenheit eines Thermostarters und/oder Photostarters durchgeführt wird.

13. Verfahren nach irgendeinem der Ansprüche 1 bis 12, **dadurch gekennzeichnet, dass** es sich bei dem Substrat um ein solches aus Kunststoff, Metall oder Glas handelt.

14. Verfahren zur Herstellung von hochkratzfesten nanostrukturierten Schichten auf Kunststoffsubstraten nach Anspruch 1, umfassend die folgenden Stufen:
a) Bereitstellen einer Dispersion von nanoskaligen Metalloxidteilchen in einem mindestens ein hydrolysierbares Silan mit polymerisierbarer/polykondensier-barer Gruppe umfassenden System in einer Konzentration von mindestens 15 Gew.-% und anschließende Vorhydrolyse des Silans;
b) Auftragen der Masse von Stufe a) auf ein Kunststoffsubstrat; und
c) photochemische Härtung der auf das Kunststoffsubstrat aufgebrachten Schicht.

15. Verfahren nach Anspruch 14, **dadurch gekennzeichnet, dass** es sich bei den Metalloxidteilchen um solche von Al₂O₃, TiO₂ und/oder ZrO₂ handelt.

16. Verfahren nach irgendeinem der Ansprüche 14 und 15, **dadurch gekennzeichnet, dass** das Silan über eine Meth(acryl)gruppe, Vinylgruppe oder Allylgruppe verfügt.

17. Verfahren nach irgendeinem der Ansprüche 14 bis 16, **dadurch gekennzeichnet, dass** in Stufe a) die Metalloxidteilchen in einer Konzentration von mindestens 20 Gew.-%, vorzugsweise mindestens 30 Gew.-%, eingesetzt werden.

18. Verfahren nach irgendeinem der Ansprüche 14 bis 17, **dadurch gekennzeichnet, dass** die Vorhydrolyse von Stufe a) in Abwesenheit von separat zugegebenem organischen Lösungsmittel durchgeführt wird.

19. Verfahren nach irgendeinem der Ansprüche 14 bis 18, **dadurch gekennzeichnet, dass** vor Durchführung von Stufe b) ein Photoinitiator zugesetzt wird.

20. Verfahren nach irgendeinem der Ansprüche 14 bis 19, **dadurch gekennzeichnet, dass** das Kunststoffsubstrat ein solches aus Poly(meth)acrylaten, Polycarbonaten oder Polystyrol ist.

21. Mit einer nanostrukturierten Schicht versehenes Substrat, erhältlich nach dem Verfahren gemäß irgendeinem der Ansprüche 1 bis 20.

## Claims

1. Process for producing nanostructured layers, comprising the following stages:
a) providing a free-flowing composition comprising nanoscale inorganic solid particles having polymerizable and/or polycondensable surface groups;
b) applying the composition from stage a) to a substrate; and
c) polymerizing and/or polycondensing the surface groups of the solid particles to form a cured layer,
wherein stage c) includes a photochemical polymerization/polycondensation.

2. Process according to Claim 1, **characterized in that** it comprises, as an additional stage, a thermal aftertreatment, preferably at a temperature in the range from 60 to 150°C, of the layer from stage c).

3. Process according to either one of Claims 1 or 2, **characterized in that** it comprises, as an additional stage, a thermal consolidation of the layer at a temperature of at least 250°C, preferably at least 400°C.

4. Process according to any one of Claims 1 to 3, **characterized in that** the nanoscale particles are selected from those of metal compounds, especially oxides, sulphides, selenides and tellurides of metals and mixtures thereof.

5. Process according to any one of Claims 1 to 4, **characterized in that** the nanoscale particles are selected from those of SiO₂, TiO₂, ZrO₂, ZnO, Ta₂O₅, SnO₂ and Al₂O₃ and mixtures thereof.

6. Process according to any one of Claims 1 to 5, **characterized in that** the polymerizable and/or polycondensable surface groups are selected from organic radicals having a (meth)acryloyl, vinyl, allyl or epoxy group.

7. Process according to any one of Claims 1 to 6, **characterized in that** the solid particles used in stage a) have been produced by surface modification of nanoscale solid particles with the appropriate surface groups.

8. Process according to any one of Claims 1 to 6, **characterized in that** the solid particles used in stage a) are produced using at least one compound having appropriate polymerizable/polycondensable groups.

9. Process according to any one of Claims 1 to 8, **characterized in that** the inorganic solid particles are produced by the sol-gel method.

10. Process according to any one of Claims 1 to 9, **characterized in that** the inorganic solid particles from stage a) additionally have fluorinated surface groups, preferably those of the formula R_{f}-CH₂-CH₂- in which R_{f} represents a perfluoroalkyl radical having 2 to 12 carbon atoms.

11. Process according to any one of Claims 1 to 10, **characterized in that** stage c) is conducted in the presence of polymerizable and/or polycondensable monomeric or oligomeric species that are not bound to the solid particles.

12. Process according to any one of Claims 1 to 11, **characterized in that** stage c) is conducted in the presence of a thermoinitiator and/or photoinitiator.

13. Process according to any one of Claims 1 to 12, **characterized in that** the substrate is one composed of plastic, metal or glass.

14. Process for producing nanostructured layers of high scratch resistance on plastics substrates according to Claim 1, comprising the following stages:
a) providing a dispersion of nanoscale metal oxide particles in a system comprising at least one hydrolysable silane having polymerizable/polycondensable groups at a concentration of at least 15% by weight and then pre-hydrolysing the silane;
b) applying the composition from stage a) to a plastics substrate; and
c) photochemically curing the layer applied to the plastics substrate.

15. Process according to Claim 14, **characterized in that** the metal oxide particles are those of Al₂O₃, TiO₂ and/or ZrO₂.

16. Process according to either one of Claims 14 and 15, **characterized in that** the silane has a (meth)acryloyl, vinyl, allyl or epoxy group.

17. Process according to any one of Claims 14 to 16, **characterized in that**, in stage a), the metal oxide particles are used in a concentration of at least 20% by weight, preferably at least 30% by weight.

18. Process according to any one of Claims 14 to 17, **characterized in that** the pre-hydrolysis of stage a) is conducted in the absence of separately added organic solvent.

19. Process according to any one of Claims 14 to 18, **characterized in that** a photoinitiator is added prior to performance of stage b).

20. Process according to any one of Claims 14 to 19, **characterized in that** the plastics substrate is one composed of poly(meth)acrylates, polycarbonates or polystyrene.

21. Substrate provided with a nanostructured layer, obtainable by the process according to any one of Claims 1 to 20.

## Revendications

1. Procédé de fabrication de couches nanostructurées, comprenant les étapes suivantes :
a) la préparation de particules solides inorganiques nanométriques avec une masse fluide contenant des groupes de surface organiques polymérisables et/ou polycondensables ;
b) l'application de la masse de l'étape a) sur un substrat ; et
c) la polymérisation et/ou la polycondensation des groupes de surface des particules solides avec formation d'une couche durcie,
l'étape c) comprenant une polymérisation/polycondensation photochimique.

2. Procédé selon la revendication 1, **caractérisé en ce qu'**il comprend en tant qu'étape supplémentaire un post-traitement thermique, de préférence à une température dans la plage allant de 60 à 150 °C, de la couche de l'étape c).

3. Procédé selon l'une quelconque des revendications 1 et 2, **caractérisé en ce qu'**il comprend en tant qu'étape supplémentaire un compactage thermique de la couche à une température d'au moins 250 °C, de préférence d'au moins 400 °C.

4. Procédé selon l'une quelconque des revendications 1 à 3, **caractérisé en ce que** les particules nanométriques sont choisies parmi celles de composés métalliques, notamment d'oxydes, de sulfures, de séléniures et de tellures de métaux et leurs mélanges.

5. Procédé selon l'une quelconque des revendications 1 à 4, **caractérisé en ce que** les particules nanométriques sont choisies parmi celles de SiO₂, TiO₂, ZrO₂, ZnO, Ta₂O₅, SnO₂ et Al₂O₃ et leurs mélanges.

6. Procédé selon l'une quelconque des revendications 1 à 5, **caractérisé en ce que** les groupes de surface polymérisables et/ou polycondensables sont choisis parmi les radicaux organiques qui disposent d'un groupe (méth)acrylique, vinylique, allylique ou époxy.

7. Procédé selon l'une quelconque des revendications 1 à 6, **caractérisé en ce que** les particules solides utilisées à l'étape a) ont été fabriquées par modification de surface de particules solides nanométriques avec les groupes de surface appropriés.

8. Procédé selon l'une quelconque des revendications 1 à 6, **caractérisé en ce que** les particules solides utilisées à l'étape a) sont fabriquées en utilisant au moins un composé contenant des groupes polymérisables/polycondensables appropriés.

9. Procédé selon l'une quelconque des revendications 1 à 8, **caractérisé en ce que** la fabrication des particules solides inorganiques a lieu par le procédé sol-gel.

10. Procédé selon l'une quelconque des revendications 1 à 9, **caractérisé en ce que** les particules solides inorganiques de l'étape a) comprennent en outre des groupes de surface fluorés, de préférence de formule R_{f}-CH₂-CH₂-, R_{f} étant un radical perfluoroalkyle de 2 à 12 atomes de carbone.

11. Procédé selon l'une quelconque des revendications 1 à 10, **caractérisé en ce que** l'étape c) est réalisée en présence d'espèces monomères ou oligomères polymérisables et/ou polycondensables non reliées aux particules solides.

12. Procédé selon l'une quelconque des revendications 1 à 11, **caractérisé en ce que** l'étape c) est réalisée en présence d'un thermo-démarreur et/ou d'un photo-démarreur.

13. Procédé selon l'une quelconque des revendications 1 à 12, **caractérisé en ce que** le substrat est en plastique, métal ou verre.

14. Procédé de fabrication de couches nanostructurées hautement résistantes aux éraflures sur des substrats en plastique selon la revendication 1, comprenant les étapes suivantes :
a) la préparation d'une dispersion de particules d'oxyde métallique nanométriques dans un système comprenant au moins un silane hydrolysable avec un groupe polymérisable/polycondensable en une concentration d'au moins 15 % en poids, puis la pré-hydrolyse du silane ;
b) l'application de la masse de l'étape a) sur un substrat en plastique ; et
c) le durcissement photochimique de la couche appliquée sur le substrat en plastique.

15. Procédé selon la revendication 14, **caractérisé en ce que** les particules d'oxyde métallique sont en Al₂O₃, TiO₂ et/ou ZrO₂.

16. Procédé selon l'une quelconque des revendications 14 et 15, **caractérisé en ce que** le silane dispose d'un groupe (méth)acrylique, vinylique ou allylique.

17. Procédé selon l'une quelconque des revendications 14 à 16, **caractérisé en ce qu'**à l'étape a), les particules d'oxyde métallique sont utilisées en une concentration d'au moins 20 % en poids, de préférence d'au moins 30 % en poids.

18. Procédé selon l'une quelconque des revendications 14 à 17, **caractérisé en ce que** la pré-hydrolyse de l'étape a) est réalisée en présence d'un solvant organique ajouté séparément.

19. Procédé selon l'une quelconque des revendications 14 à 18, **caractérisé en ce qu'**un photoinitiateur est ajouté avant la réalisation de l'étape b).

20. Procédé selon l'une quelconque des revendications 14 à 19, **caractérisé en ce que** le substrat en plastique est en poly(méth)acrylates, polycarbonates ou polystyrène.

21. Substrat muni d'une couche nanostructurée, pouvant être obtenu par le procédé selon l'une quelconque des revendications 1 à 20.
